# EUROPÄISCHE PATENTSCHRIFT

(11) **EP 3 609 740 B1**
(45) Veröffentlichungstag und Bekanntmachung des Hinweises auf die Patenterteilung: **26.08.2020**
(21) Anmeldenummer: 19700194.4
(22) Anmeldetag: 02.01.2019
(51) Int. Cl.: B60P 3/075

(54) **VORRICHTUNG ZUR HALTERUNG EINES ZWEIRADS AN EINEM STRUKTURTEIL**
DEVICE FOR SUPPORTING A TWO-WHEELED VEHICLE ON A STRUCTURAL PART
DISPOSITIF POUR LE SUPPORT D'UN VÉHICULE À DEUX ROUES SUR UN ÉLÉMENT DE STRUCTURE

(30) Priorität: 03.01.2018 DE 202018100033 U
(43) Veröffentlichungstag der Anmeldung: 19.02.2020
(73) Patentinhaber: Kölbl, Ronny, 73035 Göppingen (DE)
(72) Erfinder: Die Erfindernennung liegt noch nicht vor
(74) Vertreter: Schmid, Wolfgang
(86) Internationale Anmeldenummer: PCT/EP2019/050009
(87) Internationale Veröffentlichungsnummer: WO 2019/134901

(56) Entgegenhaltungen:
- FR-A1- 2 642 378
- US-A- 4 441 736
- US-A1- 2009 250 564

## Beschreibung

Die Erfindung betrifft eine Vorrichtung zur Halterung eines Zweirads an einem Strukturteil sowie eine Transportvorrichtung für ein Zweirad.

Fahrer von Motorrädern oder anderen Zweirädern tendieren immer öfter dazu, mit ihrem Fahrzeug an weit entfernte Orte zu reisen. Häufig wird das Zweirad dabei auf eine ein Fahrwerk aufweisende Transportvorrichtung bzw. ein Transportfahrzeug verladen, da dem Benutzer die Fahrt zum Ziel entweder zu anstrengend ist oder das Zweirad für den öffentlichen Straßenverkehr gar nicht zugelassen ist, beispielsweise im Fall von Gelände- oder Rennsportmotorrädern.

Das Verladen der Zweiräder ist meist mit einem hohen Aufwand verbunden, da dieselben auf zuverlässige Art und Weise mit dem Transportfahrzeug verbunden werden müssen, um Schäden während des Transports zu verhindern. Hierzu sind aus dem Stand der Technik die unterschiedlichsten Lösungen bekannt.

In der DE 20 2013 006 043 U1 ist eine Zurrvorrichtung als Ladungssicherung des Zweirads auf der Ladefläche eines Fahrzeugs beschrieben, bei der mehrere an dem Zweirad angreifende Zurrseile mittels jeweiliger Spindeln gespannt werden können. Im vorderen Bereich des Zweirads greifen diese Zurrseile beispielsweise am Lenker an und werden am Boden des Transportfahrzeugs eingehakt. Problematisch bei dieser Vorgehensweise ist jedoch die Tatsache, dass dabei die Federn des Zweirads sehr stark mit Kraft beaufschlagt und dadurch komprimiert werden, was grundsätzlich für die Haltbarkeit der Federn problematisch sein kann. Ein größeres Problem besteht jedoch darin, dass dies eine Kompression der Luftpolster in der Gabel bewirkt, wodurch das in der Gabel enthaltene Öl mit Druck beaufschlagt wird. Dieser Druck wird direkt auf die Dichtungselemente, in diesem Fall die Simmeringe, geleitet und führt bei dauerhafter Belastung, wie zum Beispiel bei einem längeren Transport, zur Undichtheit. Dies ist besonders dann sehr ärgerlich, wenn es erst am Zielort festgestellt wird, wo Reparaturen des Zweirads möglicherweise nicht oder nur zu sehr hohen Kosten möglich sind, sodass ein geplanter Urlaub möglicherweise nicht stattfinden kann. Insbesondere wenn ein solcher Transport des Zweirads gewerblich erfolgt, kann dies zu erheblichen Problemen führen.

Die DE 20 2017 003 076 U1 beschreibt eine rollbare und verstellbare Motorrad-Verladehilfe, mit der das Motorrad an seinen beiden Rädern aufgenommen wird. Eine ähnliche Lösung ist auch aus der DE 10 2008 060 527 A1 bekannt. Ein grundsätzliches Problem bei der Aufnahme eines Zweirads im Bereich der Räder besteht allerdings darin, dass sich aufgrund der Höhe des Zweirads bei entsprechender Krafteinwirkung, beispielsweise bei Kurvenfahrten des Transportfahrzeugs, ein erhebliches Kippmoment ergibt, wodurch ein sicherer Transport des Zweirads praktisch nicht möglich ist.

Auch die in der DE 20 2012 102 505 U1 und der EP 2 090 463 A2 beschriebenen Lösungen bringen ähnliche Probleme mit sich, da auch hier das Zweirad im Prinzip lediglich an einem oder beiden seiner Räder aufgenommen wird.

Die FR 2 642 378 A1 beschreibt eine Vorrichtung mit einem an einem Anhänger befestigten und an die Größe eines Motorrades anpassbaren, verstellbaren Fahrgestell.

Aus der US 2009/250564 A1 ist ein Motorradständer zum Lagern oder Transportieren eines Motorrades in einer unbeweglichen aufrechten Position bekannt. Dieser weist eine Ständerbasis auf, die mit einem Achsstützpfosten verbunden ist.

In der US 4 441 736 A ist eine Fixiervorrichtung für Motorräder mit einem Paar relativ zueinander einstellbarer Streben beschrieben, die zwischen einem Teil eines Motorradchassis und einem Stützrad eingefügt werden können, um das Durchbiegen des Motorradaufhängungssystems zu blockieren, wenn das Motorrad auf einem Träger über unebenes Gelände oder dergleichen gezogen wird.

Es ist daher Aufgabe der vorliegenden Erfindung, eine Vorrichtung zur Halterung eines Zweirads an einem Strukturteil zu schaffen, die eine sichere Verbindung des Zweirads mit dem Strukturteil gewährleistet und Beschädigungen des Zweirads zuverlässig vermeidet.

Erfindungsgemäß wird diese Aufgabe durch die in Anspruch 1 genannte Merkmale gelöst.

Die erfindungsgemäße Vorrichtung bietet gegenüber bekannten Lösungen wesentliche Vorteile. So wird durch das Gabelaufnahmeelement eine sichere Verbindung der Vorrichtung mit dem Zweirad gewährleistet, wobei durch die Aufnahme des Zweirads im Bereich der Gabel und der damit verbundenen Möglichkeit eines hohen Kraftangriffpunkts gewährleistet ist, dass das Zweirad auch bei hohen auf dasselbe einwirkenden Kräften nicht kippen kann. Dies wird durch die zum Anbringen der Verzurrelemente dienenden Einrichtungen unterstützt, die sich ebenfalls in einem oberen Bereich des Zweirads befinden können, wodurch ein Kippen desselben zusätzlich verhindert wird.

Durch diese direkt in die Vorrichtung integrierten Einrichtungen zum Anbringen der Verzurrelemente kann vorteilhafterweise darauf verzichtet werden, zum Verzurren notwendige Kräfte über die Gabel einzuleiten, sodass während des Transports auf die Gabelfedern wirkende Kräfte im Wesentlichen vermieden werden, was Beschädigungen des Zweirads und dessen Teile zuverlässig vermeidet.

Die zuverlässige und sichere Aufnahme des Zweirads durch die erfindungsgemäße Vorrichtung wird durch das Achsenabstützelement unterstützt, da hierdurch eine starre Verbindung zwischen der Vorrichtung und dem Zweirad möglich ist, sodass entsprechend hohe Kräfte aufgenommen werden können. Dabei stellen die Verbindungselemente die Verbindung zwischen dem Gabelaufnahmeelement und dem Achsenabstützelement sicher und komplettieren damit die in Form eines Rahmens ausgebildete Vorrichtung.

In einer sehr vorteilhaften Weiterbildung der Erfindung kann vorgesehen sein, dass die Einrichtungen zum Anbringen der Verzurrelemente an den Verbindungselementen angeordnet sind. Dadurch kann ein ausreichender Abstand zwischen den Einrichtungen zum Anbringen der Verzurrelemente und dem Achsenabstützelement geschaffen werden, sodass das Zweirad sicher mit dem entsprechenden Strukturteil verbunden werden kann.

Wenn die Verbindungselemente jeweilige Vorsprünge aufweisen, an denen die Einrichtungen zum Anbringen der Verzurrelemente angeordnet sind, so ist es möglich, die Verbindungselemente einerseits ausreichend schmal und damit leicht auszuführen und andererseits in den für die Funktion der Vorrichtung wichtigen Bereichen dennoch eine ausreichende Festigkeit zu gewährleisten.

Eine einfache Möglichkeit der Anbringung der Verzurrelemente an der erfindungsgemäßen Vorrichtung ergibt sich, wenn des Weiteren vorgesehen ist, dass die Einrichtungen zum Anbringen der Verzurrelemente als Ausnehmungen ausgebildet sind. Die Verzurrelemente können auf diese Weise zum Beispiel mittels entsprechender Haken oder ähnlichem in die Ausnehmungen eingehakt werden.

Wenn das Gabelaufnahmeelement zweiteilig ausgebildet ist und die Ausnehmungen zum Aufnehmen der Gabel des Zweirads jeweils halbkreisförmig ausgebildet sind, so ergibt sich eine einfache Möglichkeit zur Montage des Gabelaufnahmeelementes an der Gabel.

Des Weiteren kann vorgesehen sein, dass das Gabelaufnahmeelement mittels jeweiliger Verbindungsbolzen mit den Verbindungselementen verbunden ist. Dies ermöglicht eine einfache Montage der Verbindungselemente an dem Gabelaufnahmeelement und eine sichere Verbindung dieser Bauteile.

Um die Vorrichtung dauerhaft und sicher in ihrer das Zweirad fixierenden Stellung zu halten, kann des Weiteren vorgesehen sein, dass die Verbindungsbolzen mittels jeweiliger Sicherungsstifte gesichert sind.

Eine einfache Ausführung des Achsenabstützelements ergibt sich, wenn dasselbe als durch die Achse des Zweirads hindurchführbarer Bolzen ausgebildet ist. Auf diese Weise ist außerdem eine einfache Montage der Vorrichtung möglich.

Dabei kann vorgesehen sein, dass das Achsenabstützelement mittels jeweiliger Sicherungsstifte in seiner Position arretierbar ist. Dies ermöglicht auf einfache Weise ein sicheres Fixieren der Vorrichtung in ihrer das Zweirad haltenden Position.

Um eine Anpassung der Vorrichtung an unterschiedliche Ausführungen von Zweirädern zu ermöglichen, kann des Weiteren vorgesehen sein, dass auf dem Achsenabstützelement Abstandselemente zur Anlage an den Verbindungselementen und an der Gabel des Zweirads angeordnet sind.

Wenn in den Ausnehmungen in dem Gabelaufnahmeelement jeweilige Schutzelemente angeordnet sind, so werden Beschädigungen der Gabel in jeder Phase während des Transports des Zweirads mit der erfindungsgemäßen Vorrichtung verhindert.

Eine einfache Ausführungsform dieser Schutzelemente ergibt sich, wenn dieselben aus Filz bestehen und mit dem Gabelaufnahmeelement verklebt sind.

Eine weitere Anpassung der Vorrichtung an unterschiedliche Ausgestaltungen von Zweirädern kann sich ergeben, wenn die Verbindungselemente jeweilige Aussparungen zur Anpassung an die Form der Gabel des Zweirads aufweisen.

Eine weitere vorteilhafte Ausgestaltung der Erfindung kann darin bestehen, dass zumindest das Gabelaufnahmeelement und die Verbindungselemente aus einem Aluminiumwerkstoff bestehen. Dadurch wird eine leichte, robuste und vor Korrosion geschützte Ausführung der Vorrichtung erreicht.

In Anspruch 15 ist eine Transportvorrichtung für ein Zweirad mit einem Fahrwerk, einem Strukturteil und einer erfindungsgemäßen Vorrichtung angegeben.

Mittels dieser Transportvorrichtung können Zweiräder einfach und sicher an unterschiedliche Orte transportiert werden.

Nachfolgend ist ein Ausführungsbeispiel der Erfindung anhand der Zeichnung prinzipmäßig dargestellt.

Es zeigt:
- Fig. 1: eine sehr schematische Ansicht einer erfindungsgemäßen Transportvorrichtung;
- Fig. 2: eine schematische Vorderansicht der Transportvorrichtung;
- Fig. 3: eine perspektivische Ansicht der erfindungsgemäßen Vorrichtung;
- Fig. 4: eine Vorderansicht der erfindungsgemäßen Vorrichtung;
- Fig. 5: eine Seitenansicht der erfindungsgemäßen Vorrichtung;
- Fig. 6: eine Ansicht der erfindungsgemäßen Vorrichtung von unten; und
- Fig. 7: eine Draufsicht auf die erfindungsgemäße Vorrichtung.

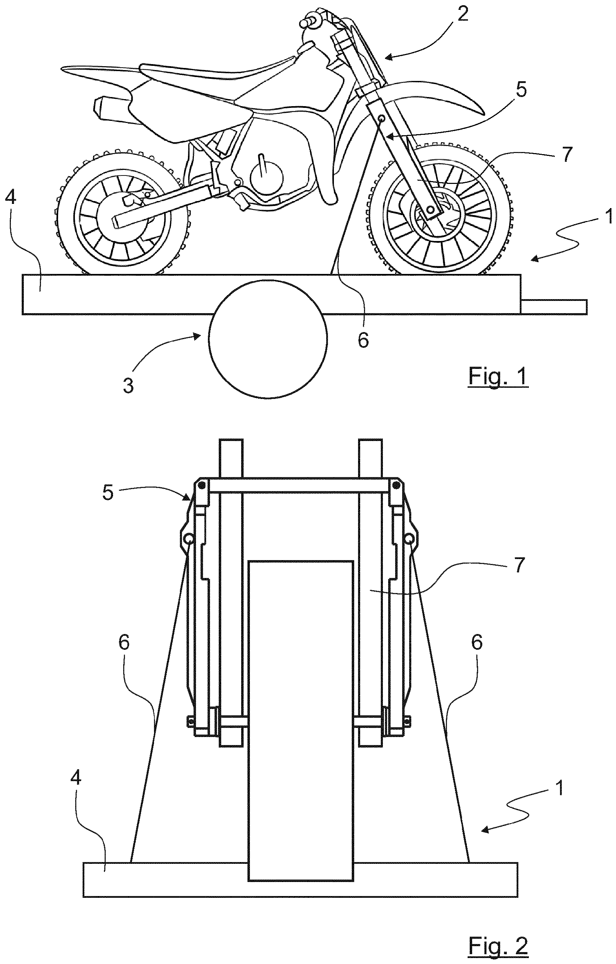

Fig. 1 zeigt eine Transportvorrichtung 1 für ein Zweirad 2, die ein Fahrwerk 3, ein Strukturteil 4 sowie eine Vorrichtung 5 zur Halterung des Zweirads 2 an dem Strukturteil 4 aufweist. Bei der Transportvorrichtung 1 handelt es sich im vorliegenden Fall um einen Anhänger, es wäre jedoch auch möglich, einen Kleintransporter, ein Schienenfahrzeug oder ähnliches als die Transportvorrichtung 1 einzusetzen. Des Weiteren ist das Strukturteil 4 als Bodenplatte der Transportvorrichtung 1 ausgebildet. Auch hier wäre es möglich, andere Strukturteile einzusetzen, um das Zweirad mit Hilfe der Vorrichtung 5 an denselben anzubringen. Beispielsweise lässt sich mit der Vorrichtung 5 das Zweirad 2 auch auf einer Hebebühne oder ähnlichem befestigen.

Auch das Zweirad 2, das in diesem Fall als Geländemotorrad ausgebildet ist, ist lediglich als beispielhaft anzusehen und es kann mit der Vorrichtung 5 im Prinzip jedes beliebige Zweirad 2 an dem Strukturteil 4 angebracht werden, wobei entsprechende Anpassungen der Vorrichtung 5 erforderlich sein können.

Die Vorrichtung 5 wird mittels mehrerer Verzurrelemente 6, von denen in Fig. 1 eines dargestellt ist, mit dem Strukturteil 4 verbunden. In Fig. 2 ist eine schematische Vorderansicht der Transportvorrichtung 1 dargestellt, aus der die Anordnung der Vorrichtung 5 gegenüber einer Gabel 7 des Zweirads 2 erkennbar ist. Auch der Angriffspunkt der Verzurrelemente 6, von denen vorzugsweise zwei, also eines auf jeder Seite des Zweirads 2, vorgesehen sind, ist in den Figuren 1 und 2 zu erkennen.

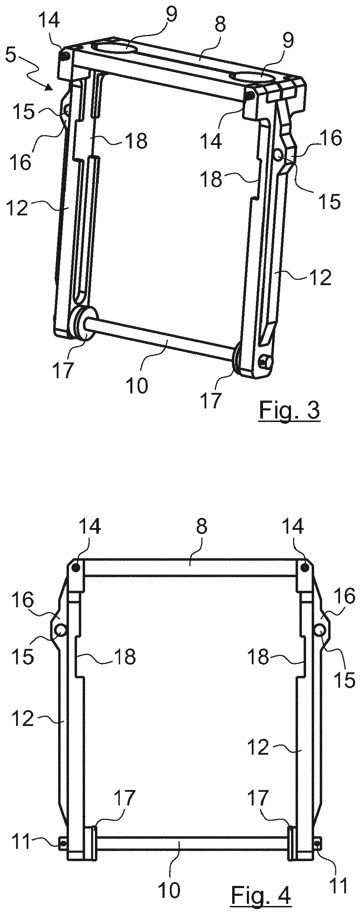

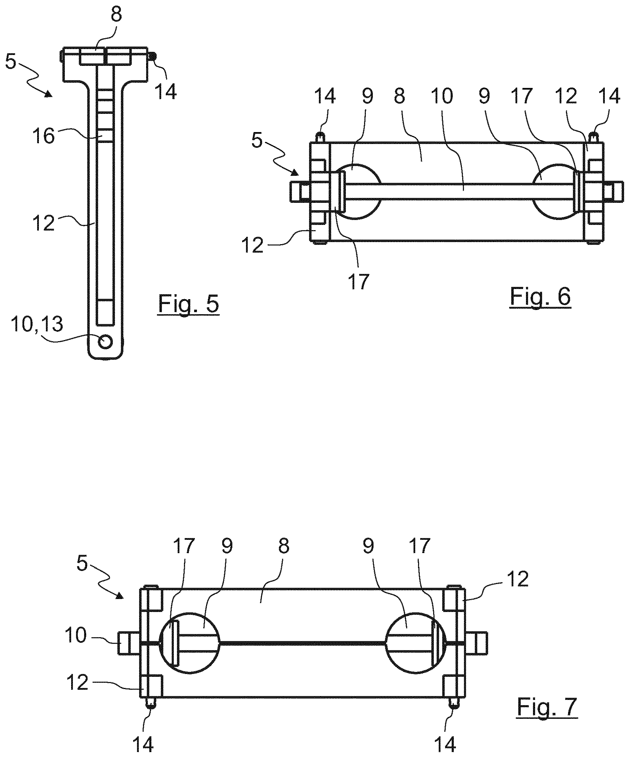

In den Figuren 3 bis 7 ist die Vorrichtung 5 mit ihren einzelnen Bauteilen detailliert dargestellt. Die Vorrichtung 5 weist in ihrem oberen Bereich ein Gabelaufnahmeelement 8 auf, das in den Figuren 3, 6 und 7 erkennbare Ausnehmungen 9 aufweist, die zum Aufnehmen der Gabel 7 des Zweirads 2 dienen. Das Gabelaufnahmeelement 8 ist, wie insbesondere in Fig. 5 erkennbar ist, zweiteilig ausgebildet und die Ausnehmungen 9 sind jeweils halbkreisförmig ausgebildet, so dass sich bei der Anordnung der beiden Teile des Gabelaufnahmeelements 8 nebeneinander, wie in Fig. 7 dargestellt, zwei kreisförmige Ausnehmungen 9 ergeben, durch welche die Gabel 7 hindurchgeführt werden kann.

Bei der Montage des Gabelaufnahmeelements 8 an der Gabel 7 werden die beiden Teile des Gabelaufnahmeelements 8 von beiden Seiten zusammengeführt, wobei die Gabel 7 sich zwischen denselben befindet, sodass die beiden Holme der Gabel 7 in den beiden Ausnehmungen 9 aufgenommen sind.

In den Ausnehmungen 9 in dem Gabelaufnahmeelement 8 können sich nicht dargestellte Schutzelemente befinden, die zum Beispiel aus Filz bestehen können und mit dem Gabelaufnahmeelement 8 verklebt werden können. Durch die Schutzelemente kann das Gabelaufnahmeelement 8 ohne Spiel an der Gabel 7 angebracht werden und es werden gleichzeitig Beschädigungen der Gabel 7 vermieden.

Auf der dem Gabelaufnahmeelement 8 gegenüberliegenden Seite, also auf der Unterseite der Vorrichtung 5, ist ein Achsenabstützelement 10 vorgesehen, das zum Abstützen der Vorrichtung 5 an einer nicht dargestellten Achse des Vorderrads des Zweirads 2 dient. Bei der Achse handelt es sich im vorliegenden Fall um eine Hohlachse, durch die das als Bolzen ausgebildete Achsenabstützelement 10 hindurchgeführt wird. Das Achsenabstützelement kann auf beiden Seiten mittels jeweilige, durch entsprechende Bohrungen in demselben durchgeführte Sicherungsstifte 11 in seiner Position arretiert werden.

Zur Verbindung des Gabelaufnahmeelements 8 mit dem Achsenabstützelement 10 dienen zwei in vertikaler Richtung verlaufende Verbindungselemente 12, die jeweilige, im vorliegenden Fall als Durchgangsbohrungen ausgebildete Ausnehmungen 13 zum Aufnehmen bzw. im vorliegenden Fall zum Hindurchführen des Achsenabstützelements 10 aufweisen. Die Verbindungselemente 12 können an ihrer Oberseite mittels jeweiliger Verbindungsbolzen 14 mit dem Gabelaufnahmeelement 8 verbunden werden. Die Verbindungsbolzen 14 sind vorzugsweise mittels jeweiliger, nicht dargestellter Sicherungsstifte gesichert. Die Sicherungsstifte zur Sicherung der Verbindungsbolzen 14 können ähnlich zu den Sicherungsstiften 11 ausgebildet sein, mit denen das Achsenabstützelement 10 in seiner Position arretiert wird. Statt der Verbindungsbolzen 14 können auch Schrauben eingesetzt werden, um die Verbindungselemente 12 mit den Gabelaufnahmeelementen 8 zu verbinden. Die Verwendung der Verbindungsbolzen 14 ermöglicht jedoch eine einfache Montage der Vorrichtung 5 an dem Zweirad 2.

An den Verbindungselementen 12 sind jeweilige Einrichtungen 15 zum Anbringen der Verzurrelemente 6 angeordnet. Die Einrichtungen 15 sind von den Ausnehmungen 12 zum Durchführen des Achsenabstützelements 10 entfernt angeordnet. Dadurch wird ein ausreichend hoher Kraftangriffspunkt der Verzurrelemente 6 an der Vorrichtung 5 erreicht. Im dargestellten Ausführungsbeispiel weisen die Verbindungselemente 12 jeweilige Vorsprünge 16 auf, in denen die Einrichtungen 15 zum Anbringen der Verzurrelemente 6 angeordnet sind. Bei den Einrichtungen 15 handelt es sich im vorliegenden Fall um Ausnehmungen, in die zum Beispiel an den Verzurrelementen 6 angeordnete Haken eingeführt werden können.

Im vorliegenden Fall sind die Einrichtungen 15 an den Verbindungselementen 12 angeordnet, da die Verbindungselemente 12 besonders einfach zugänglich sind. Grundsätzlich wäre es jedoch auch möglich, die Einrichtungen 15 zum Anbringen der Verzurrelemente 6 an dem Gabelaufnahmeelement 8 anzubringen.

Auf dem Achsenabstützelement 10 sind jeweilige Abstandselemente 17 zur Anlage an den Verbindungselementen 12 einerseits und an der Gabel 7 des Zweirads 2 andererseits angeordnet. Durch die Abstandselemente 17, die jeweilige Bohrungen zum Durchführen des Achsenabstützelements 10 aufweisen, wird eventuell vorhandenes Spiel zwischen den Bauteilen herausgenommen.

Die Verbindungselemente 12 weisen im vorliegenden Fall Aussparungen 18 zur Anpassung an die Form der Gabel 7 des Zweirads 2 auf. Die Größe und Form der Aussparungen 18 kann so gewählt werden, dass die Verbindungselemente 12 einen ausreichenden Abstand von der Gabel 7 aufweisen. Selbstverständlich können auch die Maße der weiteren Bauteile der Vorrichtung 5 an unterschiedliche Größen bzw. Formen des jeweiligen Zweirads 2 angepasst werden. Auf diese Weise lässt sich die Vorrichtung 5 für sehr sportlich orientierte Motorräder, die hauptsächlich auf Rennstrecken gefahren werden, für sogenannte Naked Bikes oder auch für Gelände- bzw. Cross-Motorräder einsetzen. Beispielsweise kann es für Geländemotorräder oder Naked Bikes erforderlich sein, die Verbindungselemente 12 länger auszuführen als bei Sport- bzw. Rennmotorrädern. Des Weiteren kann gegebenenfalls der Außendurchmesser des Achsenabstützelements 10 an den Innendurchmesser der Achse des Zweirads 2 angepasst werden.

Das Gabelaufnahmeelemente 8, die Verbindungselemente 12 und gegebenenfalls auch das Achsenabstützelement 10 können aus einem Aluminiumwerkstoff bestehen. Selbstverständlich können auch andere Werkstoffe hierfür eingesetzt werden.

Im vorliegenden Fall sind sämtliche Teile der Vorrichtung 5 mittels Fräsen aus einem Vollmaterial hergestellt, es wäre jedoch grundsätzlich auch möglich, diese Teile mittels Druckgießen oder einem anderen geeigneten Verfahren herzustellen. Auch eine Kombination mehrerer Verfahren ist selbstverständlich denkbar.

## Patentansprüche

1. Vorrichtung (5) zur Halterung eines Zweirads (2) an einem Strukturteil (4), mit folgenden Merkmalen:
- einem Gabelaufnahmeelement (8), das Ausnehmungen (9) zum Aufnehmen einer Gabel (7) des Zweirads (2) aufweist,
- einem Achsenabstützelement (10) zum Abstützen an einer Achse des Zweirads (2),
**gekennzeichnet durch**
- wenigstens zwei Verbindungselementen (12) zum Verbinden des Gabelaufnahmeelements (8) mit dem Achsenabstützelement (10), die jeweilige Ausnehmungen (13) zum Aufnehmen des Achsenabstützelements (10) aufweisen, und
- wenigstens zwei von den Ausnehmungen (13) zum Aufnehmen des Achsenabstützelements (10) beabstandeten Einrichtungen (15) zum Anbringen von Verzurrelementen (6), mit denen die Vorrichtung (5) mit dem Strukturteil (4) verbindbar ist.

2. Vorrichtung nach Anspruch 1,
**dadurch gekennzeichnet, dass**
die Einrichtungen (15) zum Anbringen der Verzurrelemente (6) an den Verbindungselementen (12) angeordnet sind.

3. Vorrichtung nach Anspruch 2,
**dadurch gekennzeichnet, dass**
die Verbindungselemente (12) jeweilige Vorsprünge (16) aufweisen, an denen die Einrichtungen (15) zum Anbringen der Verzurrelemente (6) angeordnet sind.

4. Vorrichtung nach Anspruch 1, 2 oder 3,
**dadurch gekennzeichnet, dass**
die Einrichtungen (15) zum Anbringen der Verzurrelemente (6) als Ausnehmungen ausgebildet sind.

5. Vorrichtung nach einem der Ansprüche 1 bis 4,
**dadurch gekennzeichnet, dass**
das Gabelaufnahmeelement (8) zweiteilig ausgebildet ist, wobei die Ausnehmungen (9) zum Aufnehmen der Gabel (7) des Zweirads (2) jeweils halbkreisförmig ausgebildet sind.

6. Vorrichtung nach einem der Ansprüche 1 bis 5,
**dadurch gekennzeichnet, dass**
das Gabelaufnahmeelement (8) mittels jeweiliger Verbindungsbolzen (14) mit den Verbindungselementen (12) verbunden ist.

7. Vorrichtung nach Anspruch 6,
**dadurch gekennzeichnet, dass**
die Verbindungsbolzen (14) mittels jeweiliger Sicherungsstifte gesichert sind.

8. Vorrichtung nach einem der Ansprüche 1 bis 7,
**dadurch gekennzeichnet, dass**
das Achsenabstützelement (10) als durch die Achse des Zweirads (2) hindurchführbarer Bolzen ausgebildet ist.

9. Vorrichtung nach Anspruch 8,
**dadurch gekennzeichnet, dass**
das Achsenabstützelement (10) mittels jeweiliger Sicherungsstifte (11) in seiner Position arretierbar ist.

10. Vorrichtung nach Anspruch 8 oder 9,
**dadurch gekennzeichnet, dass**
auf dem Achsenabstützelement (10) Abstandselemente (17) zur Anlage an den Verbindungselementen (12) und an der Gabel (7) des Zweirads (2) angeordnet sind.

11. Vorrichtung nach einem der Ansprüche 1 bis 10,
**dadurch gekennzeichnet, dass**
in den Ausnehmungen (9) in dem Gabelaufnahmeelement (8) jeweilige Schutzelemente angeordnet sind.

12. Vorrichtung nach Anspruch 11,
**dadurch gekennzeichnet, dass**
die Schutzelemente aus Filz bestehen und mit dem Gabelaufnahmeelement (8) verklebt sind.

13. Vorrichtung nach einem der Ansprüche 1 bis 12,
**dadurch gekennzeichnet, dass**
die Verbindungselemente (12) jeweilige Aussparungen (18) zur Anpassung an die Form der Gabel (7) des Zweirads (2) aufweisen.

14. Vorrichtung nach einem der Ansprüche 1 bis 13,
**dadurch gekennzeichnet, dass**
zumindest das Gabelaufnahmeelement (8) und die Verbindungselemente (12) aus einem Aluminiumwerkstoff bestehen.

15. Transportvorrichtung (1) für ein Zweirad (2), mit einem Fahrwerk (3), mit einem Strukturteil (4), mit einer Vorrichtung (5) nach einem der Ansprüche 1 bis 14 und mit Verzurrelementen (6), die mit den Einrichtungen (15) zum Anbringen derselben in Eingriff sind und mit denen die Vorrichtung (5) mit dem Strukturteil (4) verbunden ist.

## Claims

1. Apparatus (5) for supporting a two-wheeled vehicle (2) on a structural part (4), having the following features:
- a fork receiving element (8) having recesses (9) for receiving a fork (7) of the two-wheeled vehicle (2),
- an axle support element (10) for supporting on an axle of the two-wheeled vehicle (2),
- at least two connecting elements (12) for connecting the fork receiving element (8) to the axle support element (10), which have respective recesses (13) for receiving the axle support element (10), and
- at least two means (15) which are arranged at a distance from the recesses (13) for receiving the axle support element (10) for attaching lashing elements (6) by means of which the apparatus (5) can be connected to the structural part (4).

2. Apparatus according to claim 1,
**characterised in that**
the means (15) for attaching the lashing elements (6) are arranged on the connecting elements (12).

3. Apparatus according to claim 2,
**characterised in that**
the connecting elements (12) have respective projections (16) on which the means (15) for attaching the lashing elements (6) are arranged.

4. Apparatus according to claim 1, 2 or 3,
**characterised in that**
the means (15) for attaching the lashing elements (6) are designed as recesses.

5. Apparatus according to one of claims 1 to 4,
**characterised in that**
the fork receiving element (8) is formed in two parts, wherein the recesses (9) for receiving the fork (7) of the two-wheeled vehicle (2) are each formed in a semicircular shape.

6. Apparatus according to any one of claims 1 to 5,
**characterised in that**
the fork receiving element (8) is connected to the connecting elements (12) by means of respective connecting bolts (14).

7. Apparatus according to claim 6,
**characterised in that**
the connecting bolts (14) are secured by means of respective locking pins.

8. Apparatus according to any one of claims 1 to 7,
**characterised in that**
the axle support element (10) is designed as a bolt which can be passed through the axle of the two-wheeled vehicle (2).

9. Apparatus according to claim 8,
**characterised in that**
the axle support element (10) can be locked in its position by means of respective locking pins (11).

10. Apparatus according to claim 8 or 9,
**characterised in that**
spacer elements (17) are arranged on the axle support element (10) for abutment on the connecting elements (12) and on the fork (7) of the two-wheeled vehicle (2).

11. Apparatus according to any one of claims 1 to 10,
**characterised in that**
respective protective elements are arranged in the recesses (9) in the fork receiving element (8).

12. Apparatus according to claim 11,
**characterised in that**
the protective elements consist of felt and are glued to the fork receiving element (8).

13. Apparatus according to any one of claims 1 to 12,
**characterised in that**
the connecting elements (12) have respective recesses (18) for adaptation to the shape of the fork (7) of the two-wheeled vehicle (2).

14. Apparatus according to any one of claims 1 to 13,
**characterised in that**
at least the fork receiving element (8) and the connecting elements (12) consist of an aluminium material.

15. Transport device (1) for a two-wheeled vehicle (2), having a chassis (3), a structural part (4), an apparatus (5) according to one of claims 1 to 14 and with lashing elements (6) which are in engagement with the means (15) for attaching the same and with which the apparatus (5) is connected to the structural part (4).

## Revendications

1. Dispositif (5) pour le support d'un véhicule à deux roues (2) sur un élément de structure (4), comprenant les caractéristiques suivantes :
- un élément de réception de fourche (8) qui comporte des évidements (9) destinés à recevoir une fourche (7) du véhicule à deux roues (2), et
- un élément de support d'essieu (10) pour supporter un essieu du véhicule à deux roues (2),
**caractérisé par** :
- au moins deux éléments de liaison (12) pour relier l'élément de réception de fourche (8) à l'élément de support d'essieu (10) et qui comportent des évidements respectifs (13) destinés à recevoir l'élément de support d'essieu (10), et
- au moins deux dispositifs (15) espacés des évidements (13) destinés à recevoir l'élément de support d'essieu (10) pour appliquer des éléments de serrage (6) à l'aide desquels le dispositif (5) peut être assemblé à l'élément de structure (4).

2. Dispositif selon la revendication 1, **caractérisé en ce que** les dispositifs (15) destinés à appliquer les éléments de serrage (6) sont disposés sur les éléments de liaison (12).

3. Dispositif selon la revendication 2, **caractérisé en ce que** les éléments de liaison (12) comportent des saillies respectives (16) sur lesquelles les dispositifs (15) destinés à appliquer les éléments de serrage (6) sont disposés.

4. Dispositif selon la revendication 1, 2 ou 3, **caractérisé en ce que** les dispositifs (15) destinés à appliquer les éléments de serrage (6) sont réalisés sous la forme d'évidements.

5. Dispositif selon l'une quelconque des revendications 1 à 4, **caractérisé en ce que** l'élément de réception de fourche (8) est réalisé en deux parties, dans lequel les évidements (9) destinés à recevoir la fourche (7) du véhicule à deux roues (2) sont chacun de forme semi-circulaire.

6. Dispositif selon l'une quelconque des revendications 1 à 5, **caractérisé en ce que** l'élément de réception de fourche (8) est assemblé aux éléments de liaison (12) à l'aide de boulons d'assemblage respectifs (14).

7. Dispositif selon la revendication 6, **caractérisé en ce que** les boulons de liaison (14) sont bloqués à l'aide de tiges de blocage respectives.

8. Dispositif selon l'une quelconque des revendications 1 à 7, **caractérisé en ce que** l'élément de support d'essieu (10) peut être introduit à travers l'essieu du véhicule à deux roues (2).

9. Dispositif selon la revendication 8, **caractérisé en ce que** l'élément de support d'essieu (10) peut être bloqué dans sa position à l'aide de tiges de blocage respectives (11).

10. Dispositif selon la revendication 8 ou 9, **caractérisé en ce que** des éléments d'écartement (17) sont disposés sur l'élément de support d'essieu (10) en vue de l'appui sur les éléments de liaison (12) et sur la fourche (7) du véhicule à deux roues (2).

11. Dispositif selon l'une quelconque des revendications 1 à 10, **caractérisé en ce que** des éléments de protection respectifs sont disposés dans les évidements (9) dans l'élément de réception de fourche (8).

12. Dispositif selon la revendication 11, **caractérisé en ce que** les éléments de protection sont constitués de feutre et sont collés à l'élément de réception de fourche (8).

13. Dispositif selon l'une quelconque des revendications 1 à 12, **caractérisé en ce que** les éléments de liaison (12) présentent des découpes respectives (18) pour l'adaptation à la forme de la fourche (7) du véhicule à deux roues (2).

14. Dispositif selon l'une quelconque des revendications 1 à 13, **caractérisé en ce qu'**au moins l'élément de réception de fourche (8) et les éléments de liaison (12) sont constitués d'un matériau à base d'aluminium.

15. Dispositif de transport (1) pour un véhicule à deux roues (2) comprenant un châssis (3), un élément de structure (4) et un dispositif (5) selon l'une quelconque des revendications 1 à 14 et comprenant des éléments de serrage (6) qui sont en prise avec les dispositifs (15) destinés à appliquer ceux-ci et par l'intermédiaire desquels le dispositif (5) est relié à l'élément de structure (4).
